# EUROPÄISCHE PATENTANMELDUNG

(11) **EP 0 913 077 A1**
(43) Veröffentlichungstag der Anmeldung: **06.05.1999**
(21) Anmeldenummer: 98118808.9
(22) Anmeldetag: 05.10.1998
(51) Int. Cl.: A01C 15/00

(54) **Transportfahrzeug**

(30) Priorität: 31.10.1997 DE 19748179
(71) Anmelder: Amazonen-Werke H. Dreyer GmbH & Co. KG, D-49205 Hasbergen (DE)
(72) Erfinder: Dreyer, Heinz Dr. Dipl.-Ing., 49205 Hasbergen (DE)

(57) **Zusammenfassung**

Transportfahrzeug mit einem Tragrahmen (1) und einem Fahrwerk (2), zumindest einem Vorratstank (3,4) und zugeordnetem Förderorgan (13,14) zum Materialtransport zu einer rückseitig an dem Transportfahrzeug angeordneten Verteilvorrichtungen (7) mit zumindest einem Vorratsbehälter (8,9) und zugeordnetem Dosierorgan (10) und Verteileinrichtung (11), wobei das Transportfahrzeug zumindest zwei Vorratstanks (3,4) mit jeweils zugeordnetem Förderorgan (13,14) aufweist.

## Beschreibung

Die Erfindung betrifft ein Transportfahrzeug gemäß des Oberbegriffes des Patentanspruches 1.

Ein derartiges Transportfahrzeug ist beispielsweise durch die DE-OS 21 41 520 bekannt. Dieses Transportfahrzeug weist einen Tragrahmen und ein Fahrwerk auf. Auf dem Tragrahmen ist ein Vorratstank mit einem zugeordneten Förderorgan angeordnet. Dieses Förderorgan fördert das Material aus dem Vorratstank in einen Vorratsbehälter einer hinter dem Vorratstank mittels einer Dreipunktkupplung angeordneten Verteilvorrichtung, die als Schleuderstreuer ausgebildet ist. Das Fassungsvermögen des Vorratstanks ist, unter der Voraussetzung, daß eine möglichst geringe Bauhöhe angestrebt werden soll, aufgrund einer möglichst günstigen, niedrigen Schwerpunktlage, begrenzt.

Der Erfindung liegt die Aufgabe zugrunde, ein vorteilhaft ausgebildetes Transportfahrzeug zu schaffen.

Diese Aufgabe wird erfindungsgemäß dadurch gelöst, daß das Transportfahrzeug zumindest zwei Vorratstanks mit jeweils zugeordneten Förderorganen aufweist. Hierbei ist vorteilhaft, daß die beiden Vorratstanks in Fahrtrichtung gesehen hintereinander angeordnet sind.

Um eine unabhängige Förderung von Material aus den verschiedenen Vorratstanks zu ermöglichen, ist vorgesehen, daß die beiden Förderorgane unabhängig voneinander antreibbar sind. Ein einfacher Antrieb der Förderorgane läßt sich dadurch verwirklichen, daß den Förderorganen als Hydraulikmotoren ausgebildete Antriebselemente zugeordnet sind.

Eine einfache Ausbildung der Förderorgane läßt sich dadurch erreichen, daß die Förderorgane als Förderschnecken ausgebildet sind.

Um das in den Vorratstanks enthaltene und transportierte Material in einfacher Weise auf dem Feld in Breitverteilung verteilen zu können, ist vorgesehen, daß die Verteilvorrichtung als Dreipunktanbaumaschine ausgebildet und mittels einer Dreipunktanbauvorrichtung an dem Tragrahmen des Transportfahrzeuges angeordnet ist. Hierbei kann die Verteilvorrichtung eine zwei Vorratsbehälter aufweisende Vorratsbehältereinheit aufweisen. Somit ist es in Verbindung mit dem Vorratstank und der Vorratsbehältereinheit möglich, in einfacher Weise in einem einzigen Arbeitsgang zwei verschiedene Materialien auszubringen. Hierbei ist das eine Förderorgan dem einen Vorratsbehälter der Vorratsbehältereinheit und das andere Förderorgan dem anderen Vorratsbehälter der Vorratsbehältereinheit zugeordnet.

Um eine gute Entleerung der Förderschnecken zu erreichen, ist vorgesehen, daß die Förderschnecken mindestens unter einem Steigungswinkel von 30 Grad zur Horizontalen angeordnet sind.

Um in automatischer Weise einen ausreichenden Füllstand zum kontinuierlichen Ausbringen des Materials durch die Verteileinrichtung sicher zu stellen, ist vorgesehen, daß der Verteileinrichtung bzw. den Vorratsbehältern der Verteileinrichtung Sensorelemente zur Füllstandsmessung zugeordnet sind, daß anhand der von den Sensoren gelieferten Signalen die Antriebselemente für die Förderorgane in Abhängigkeit des Füllstandes der Vorratsbehälter schaltbar sind.

Um das Material aus den beiden Vorratstanks durch die Förderorgane einem Vorratsbehälter zuleiten zu können, ist vorgesehen, daß den Förderoganen an ihren Auslaßenden Leitelemente zugeordnet sind, die derart einstellbar sind, daß über die Förderorgane einem Vorratsbehälter der Verteileinrichtung Material zuführbar ist. Um eine ausreichende Querverteilung des Materials beim Einfüllen in die Vorratsbehälter der Verteileinrichtung sicher zu stellen, ist vorgesehen, daß den Förderorganen an ihren Auslaßenden das Material quer zur Fahrtrichtung in zwei Teilströme aufteilende Leitmittel zugeordnet sind.

Um einen Einsatz des Transportfahrzeuges bei der Spätdüngung in hoch aufgewachsenem Getreide ohne Beschädigung der Getreidehalme zu ermöglichen, ist vorgesehen, daß den unteren Enden der Förderorgane Abweiselemente, wie beispielsweise Halmteiler zugeordnet sind. In vorteilhafter Weise sind die unteren Enden der Förderorgane und/oder die Abweiselemente in einem Abstand von zumindest ca. 60 cm zur Bodenoberfläche angeordnet.

Um das Material aus dem vorderen in den hinteren Vorratstank umladen zu können, ist vorgesehen, daß das aus dem vorderen Vorratstank fördernde Förderorgan im Bereich des hinteren Vorratstanks eine durch ein Abdeckelement abdeckbare Austrittsöffnung aufweist.

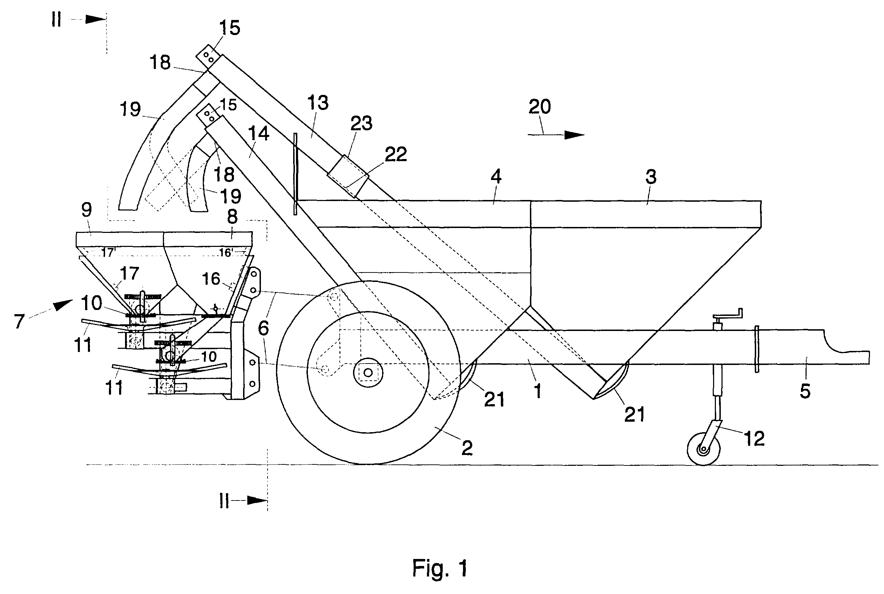

Weitere Einzelheiten der Erfindung sind der Beispielsbeschreibung und den Zeichnungen zu entnehmen. Hierbei zeigen
- Fig.1: den Vorratstank mit angebauter Verteilvorrichtung in Seitenansicht und in Prinzipdarstellung und

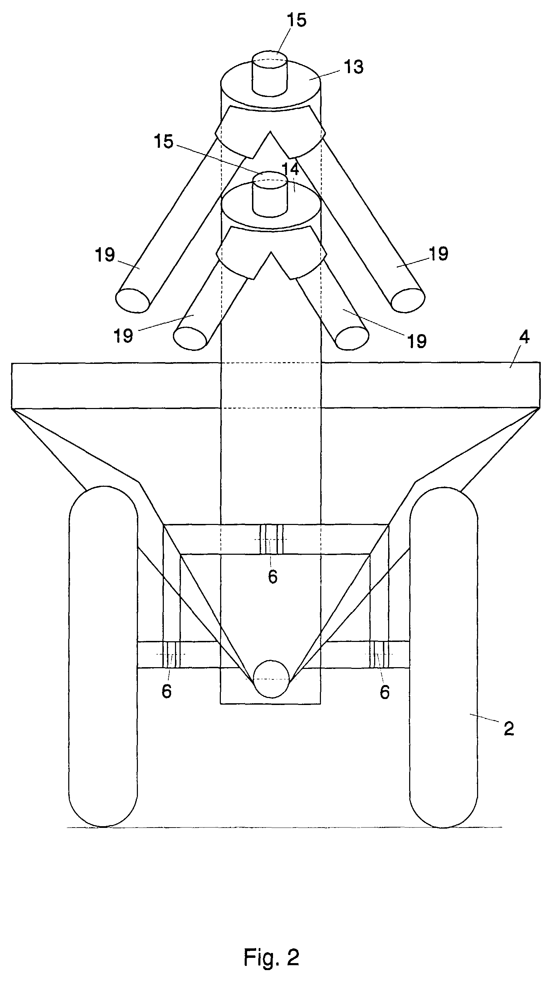

- Fig.2: das Transportfahrzeug in der Ansicht II-II.

Das Transportfahrzeug weist den Tragrahmen 1 mit dem Fahrwerk 2 auf. Dem Fahrwerk 2 sind zwei hintereinander angeordnete Vorratstanks 3 und 4 zugeordnet. Über die Deichsel 5 des Tragrahmens 1 ist das Transportfahrzeug an eine Zugmaschine anzukoppeln. An der Rückseite des Tragrahmens 1 ist eine Dreipunktkupplung 6 angeordnet, über welche die Verteileinrichtung 7 an das Transportfahrzeug angeordnet ist. Die Verteileinrichtung 7 ist im Ausführungsbeispiels als Schleuderstreuer mit zwei getrennten Vorratsbehältern 8 und 9 zur getrennten Mitführung von zwei verschiedenen Materialien ausgebildet. Den Vorratsbehältern 8 und 9 der Verteileinrichtung 7 sind Dosiereinrichtungen 10 zugeordnet, über welche das sich in den Vorratsbehältern 8 und 9 befindliche Material darunter angeordneten und über eine Kraftquelle in nicht näher dargestellter Weise rotierend angetriebenen Schleuderscheiben 11 zugeführt wird. Die Schleuderscheiben 11 verteilen das zugeführte Material in Breitverteilung über den Boden.

Die Laufräder 2 des Fahrwerks sind derart an dem Tragrahmen 1 angeordnet, daß immer eine ausreichende Stützlast auf die Zugdeichsel 5 bzw. auf das als Stützrad 12 ausgebildetet Stützelement, selbst bei gefüllten Behältern 8 und 9 der Verteileinrichtung 7 ausgeübt wird, damit das Transportfahrzeug immer einen sicheren und stabilen Stand hat.

Jedem Vorratstank 3 und 4 des Transportfahrzeuges ist ein als Förderschnecke 13 bzw. 14 ausgebildetes Förderorgan zugeordnet. Die Förderorgane 13 bzw. 14 werden von Hydraulikmotoren 15 angetrieben. Die Hydraulikmotoren 15 sind mit Hydraulikpumpen oder der Hydraulikanlage des Zugfahrzeuges verbunden. Die beiden Förderorgane 13 bzw. 14 sind über die Hydraulikmotoren 15 unabhängig voneinander antreibbar.

Die Förderorgane 13 bzw. 14 sind mindestens unter einem Steigungswinkel von 30 Grad zur Horizontalen angeordnet. Jedes Förderorgan 13 bzw. 14 ist einem der Vorratsbehälter 8 bzw. 9 der Verteileinrichtung 7 zugeordnet.

Den Vorratsbehältern 8 und 9 der Verteileinrichtung 7 sind Sensorelemente 16 und 16' bzw. 17 und 17' zur Füllstandsmessung zugeordnet. Die Sensoren 16 und 17 geben ein Signal ab, wenn der Füllstandspegel unter den eingestellten Mindestpegel abfällt, während die Sensoren 16' und 17' ein Signal abgeben, wenn der Füllstandspegel den eingestellten Höchstfüllstand erreicht. Diese Sensoren 16, 16', 17, 17' sind mit einer nicht dargestellten Steuer- und Regeleinrichtung, die die Antriebselemente 15 der Förderorgane 13 bzw. 14 steuert, verbunden. Anhand der von den Sensoren 16, 16', 17, 17' gelieferten Signalen sind die Antriebselemente 15 der Förderorgane 13 und 14 in Abhängigkeit des Füllstandes in dem Vorratsbehälter 8 und 9 schaltbar. Hierdurch wird sichergestellt, daß immer eine ausreichende Menge Material in den Vorratsbehältern 8 und 9 vorhanden ist, um so einen kontinuierlichen Ausbringvorgang durch die Verteileinrichtung 7 zu gewährleisten. Hierbei kann die Schaltung so ausgelegt sein, daß nur so viel Material in die Vorratsbehälter 8 und 9 nachgefüllt wird, damit auch bei leeren Vorratstanks 3 und 4 des Tankfahrzeugs immer eine ausreichende Stützlast auf das Stützrad 12 erhalten bleibt.

An den Auslaßenden 18 der Förderorgane 13 und 14 sind Leitelemente 19 angeordnet, die derart einstellbar sind, daß über die Förderorgane 13 und 14 einem oder beiden Vorratsbehältern 8, 9 der Verteileinrichtung 7 Material zuführbar ist. Dieses heißt, daß es möglich ist, aus beiden Vorratstanks 3 und 4 einem Vorratsbehälter 8 bzw. 9 das Material zuleitbar ist. Desweiteren sind diese Leitelemente 19 derart ausgebildet, daß sie von ihren Auslaßenden 18 das Material quer zur Fahrtrichtung 20 in zwei Teilströme aufteilen. Durch diese Leitmittel 19 wird somit eine gute Befüllung der Vorratsbehälter quer zur Fahrtrichtung 20 erreicht.

Damit Beschädigungen von Getreidepflanzen beim Einsatz des Vorratstanks zur Spätdüngung, wenn die Pflanzen bereits hoch aufgewachsen sind, weitgehend vermieden werden, sind die unteren Enden der Förderorgane 13 und 14 in einem Abstand von zumindest 60 cm zur Bodenoberfläche angeordnet. Weiterhin ist beim Einsatz zur Spätdüngung vorteilhaft, wenn den unteren Enden der Förderorgane 13 und 14 Abweiselemente 21, wie beispielsweise Halmteiler, zugeordnet sind.

Desweiteren ist der Förderschnecke 13, die dem vorderen Tank 3 des Transportfahrzeuges zugeordnet ist, im Bereich des hinteren Vorratstanks 4 eine Austrittsöffnung 22 angeordnet. Diese Austrittsöffnung 22 ist durch ein wegnehmbares Abdeckelement 23 verschlossen. Dieses Abdeckelement 23 kann in verschiebbarer Weise, beispielsweise auf dem Förderrohr der Förderschnecke 13, angeordnet sein. Wenn die Austrittsöffnung 22 durch das Abdeckelement 23 freigegeben ist, fördert die Förderschnecke 13 aus dem vorderen Vorratstank 3 Material in den hinteren Vorratstank 4. Somit kann ein einfaches Umladen des Materials von dem vorderen Tank 3 zu dem hinteren Tank 4 erfolgen.

## Patentansprüche

1. Transportfahrzeug mit einem Tragrahmen und einem Fahrwerk, zumindest einem Vorratstank und zugeordnetem Förderorgan zum Materialtransport zu einer rückseitig an dem Transportfahrzeug angeordneten Verteilvorrichtungen mit zumindest einem Vorratsbehälter und zugeordnetem Dosierorgan und Verteileinrichtung, dadurch gekennzeichnet, daß das Transportfahrzeug zumindest zwei Vorratstanks (3, 4) mit jeweils zugeordnetem Förderorgan (13, 14) aufweist.

2. Transportfahrzeug nach Anspruch 1, dadurch gekennzeichnet, daß die beiden Förderorgane (13, 14) unabhängig voneinander antreibbar sind.

3. Transportfahrzeug nach Anspruch 2, dadurch gekennzeichnet, daß den Förderorganen (13, 14) als Hydraulikmotore (15) ausgebildete Antriebselemente zugeordnet sind.

4. Transportfahrzeug nach einem oder mehreren der vorstehenden Ansprüche, dadurch gekennzeichnet, daß die Förderorgane (13, 14) als Förderschnecken ausgebildet sind.

5. Transportfahrzeug nach einem oder mehreren der vorstehenden Ansprüche, dadurch gekennzeichnet, daß die Verteilvorrichtung (7) als Dreipunktanbaumaschine ausgebildet und mittels einer Dreipunktanbauvorrichtung (6) an dem Tragrahmen (1) des Transportfahrzeuges angeordnet ist.

6. Transportfahrzeug nach einem oder mehreren der vorstehenden Ansprüche, dadurch gekennzeichnet, daß die Verteilvorrichtung (7) eine zwei Vorratsbehälter (8, 9) aufweisende Vorratsbehältereinheit aufweist.

7. Transportfahrzeug nach einem oder mehreren der vorstehenden Ansprüche, dadurch gekennzeichnet, daß das eine Förderorgan (13) dem einen Vorratsbehälter (8) der Vorratsbehältereinheit und das andere Förderorgan (14) dem anderen Vorratsbehälter (9) der Vorratsbehältereinheit der Verteileinrichtung (7) zugeordnet ist.

8. Transportfahrzeug nach einem oder mehreren der vorstehenden Ansprüche, dadurch gekennzeichnet, daß die Förderschnecken (13, 14) mindestens unter einem Steigungswinkel von 30 Grad zur Horizontalen angeordnet sind.

9. Transportfahrzeug nach einem oder mehreren der vorstehenden Ansprüche, dadurch gekennzeichnet, daß der Verteilvorrichtung (7) bzw. den Vorratsbehältern (8, 9) der Verteilvorrichtung (7) Sensorelemente (16, 16', 17, 17') zur Füllstandsmessung zugeordnet sind, daß anhand der von den Sensoren (16, 16', 17, 17') gelieferten Signalen die Antriebselemente (15) für die Förderorgane (13, 14) in Abhängigkeit des Füllstandes der Vorratsbehälter (8, 9) schaltbar sind.

10. Transportfahrzeug nach einem oder mehreren der vorstehenden Ansprüche, dadurch gekennzeichnet, daß den Förderorganen (13, 14) an ihren Auslaßenden (18) Leitelemente (19) zugeordnet sind, die derart einstellbar sind, daß über die Förderorgane (13, 14) einem Vorratsbehälter (8, 9) der Verteileinrichtung (7) Material zuführbar ist.

11. Transportfahrzeug nach einem oder mehreren der vorstehenden Ansprüche, dadurch gekennzeichnet, daß den Förderorganen (13, 14) an ihren Auslaßenden (18) das Material quer zur Fahrtrichtung (20) in zwei Teilströme aufteilende Leitmittel (19) zugeordnet sind.

12. Transportfahrzeug nach einem oder mehreren der vorstehenden Ansprüche, dadurch gekennzeichnet, daß den unteren Enden der Förderorgane (13, 14) Abweiselemente (21), wie beispielsweise Halmteiler, zugeordnet sind.

13. Transportfahrzeug nach einem oder mehreren der vorstehenden Ansprüche, dadurch gekennzeichnet, daß die unteren Enden der Förderorgane (13, 14) und/oder die Abweiselemente (21) einen Abstand von zumindest ca. 60 cm zur Bodenoberfläche aufweisen.

14. Transportfahrzeug nach einem oder mehreren der vorstehenden Ansprüche, dadurch gekennzeichnet, daß das aus dem vorderen Vorratstank (3) fördernde Förderorgan (13) im Bereich des hinteren Vorratstanks (4) eine durch ein Abdeckelement (23) abgedeckte Austrittsöffnung (22) aufweist.
